# EUROPEAN PATENT APPLICATION

(11) **EP 4 778 657 A1**
(43) Date of publication of application: **22.07.2026**
(21) Application number: 24917570.4
(22) Date of filing: 31.10.2024
(51) Int. Cl.: B23C 3/12, B23C 5/12, B23B 51/10

(54) **CHAMFERING TOOL**

(71) Applicant: Sumitomo Electric Hardmetal Corp., Itami-shi, Hyogo 664-0016 (JP)
(72) Inventor: KINOSHITA, Keiji, Itami-shi, Hyogo 664-0016 (JP); NONEN, Toya, Itami-shi, Hyogo 664-0016 (JP)
(74) Representative: Boult Wade Tennant LLP
(86) International application number: PCT/JP2024/038922
(87) International publication number: WO 2026/094217

(57) **Abstract**

A chamfering tool rotates about an axis. The chamfering tool comprises a rake face, a front flank face, a rear flank face, a front cutting edge and a rear cutting edge. The front flank face is contiguous to the rake face. The rear flank face is located axially rearward of the front flank face and contiguous to the rake face and the front flank face. The front cutting edge is defined by a ridgeline formed by the rake face and the front flank face. The rear cutting edge is defined by a ridgeline formed by the rake face and the rear flank face. In a radial direction of the chamfering tool, a front end of the front cutting edge is located inward of a rear end of the front cutting edge. In the radial direction of the chamfering tool, a front end of the rear cutting edge is located outward of a rear end of the rear cutting edge. The front cutting edge has a true rake angle larger than 0°. The rear cutting edge has a true rake angle larger than 0°.

## Description

### TECHNICAL FIELD

The present disclosure relates to a chamfering tool.

### BACKGROUND ART

Japanese Patent Laying-Open No. 2021-074798 (PTL 1) discloses a chamfering tool capable of chamfering an end portion of an upper surface of a workpiece.

### CITATION LIST

### PATENT LITERATURE

PTL 1: Japanese Patent Laying-Open No. 2021-074798

### SUMMARY OF INVENTION

A presently disclosed chamfering tool rotates about an axis. The chamfering tool comprises a rake face, a front flank face, a rear flank face, a front cutting edge and a rear cutting edge. The front flank face is contiguous to the rake face. The rear flank face is located axially rearward of the front flank face and contiguous to the rake face and the front flank face. The front cutting edge is defined by a ridgeline formed by the rake face and the front flank face. The rear cutting edge is defined by a ridgeline formed by the rake face and the rear flank face. In a radial direction of the chamfering tool, a front end of the front cutting edge is located inward of a rear end of the front cutting edge. In the radial direction of the chamfering tool, a front end of the rear cutting edge is located outward of a rear end of the rear cutting edge. The front cutting edge has a true rake angle larger than 0°. The rear cutting edge has a true rake angle larger than 0°.

### BRIEF DESCRIPTION OF DRAWINGS

Fig. 1 is a front view of a chamfering tool according to a first embodiment.
Fig. 2 is a side view of the chamfering tool according to the first embodiment.
Fig. 3 is a partially enlarged side view of a region III shown in Fig. 2.
Fig. 4 is a perspective view showing a true rake angle of a front cutting edge.
Fig. 5 is a perspective view showing a true rake angle of a rear cutting edge.
Fig. 6 schematically shows how the front cutting edge is used to chamfer an upper surface of a workpiece.
Fig. 7 schematically shows how the rear cutting edge is used to chamfer a lower surface of a workpiece.

### DETAILED DESCRIPTION

### [Problem to be Solved by the Present Disclosure]

A known chamfering tool has a front cutting edge for chamfering an end portion of an upper surface of a workpiece and a rear cutting edge for chamfering an end portion of a lower surface of a workpiece. Such a chamfering tool has generally had a radial rake angle smaller than 0° and an axial rake angle larger than 0°. Chamfering with the chamfering tool entails large cutting resistance.

It is an object of the present disclosure to provide a chamfering tool with reduced cutting resistance.

### [Advantageous Effect of the Present Disclosure]

According to the present disclosure, a chamfering tool with reduced cutting resistance can be provided.

### [Summary of Embodiments]

Initially, embodiments of the present disclosure will be summarized.
(1) A presently disclosed chamfering tool rotates about an axis. The chamfering tool comprises a rake face, a front flank face, a rear flank face, a front cutting edge and a rear cutting edge. The front flank face is contiguous to the rake face. The rear flank face is located rearward of the front flank face in an axial direction and contiguous to the rake face and the front flank face. The front cutting edge is defined by a ridgeline formed by the rake face and the front flank face. The rear cutting edge is defined by a ridgeline formed by the rake face and the rear flank face. In a radial direction of the chamfering tool, a front end of the front cutting edge is located inward of a rear end of the front cutting edge. In the radial direction of the chamfering tool, a front end of the rear cutting edge is located outward of a rear end of the rear cutting edge. The front cutting edge has a true rake angle larger than 0°. The rear cutting edge has a true rake angle larger than 0°.

The presently disclosed chamfering tool chamfers a workpiece with reduced cutting resistance. This can suppress formation of secondary burr and an affected layer during chamfering. Further, the reduced cutting resistance allows the chamfering tool to have an increased lifetime.

(2) The chamfering tool according to (1) above may have a rake angle larger than 0° in the radial direction. This allows the front and rear cutting edges to both have a true rake angle larger than 0°.

(3) The chamfering tool according to (1) or (2) above may have a rake angle of 1° or larger in the radial direction. This allows the front and rear cutting edges to both have a true rake angle larger than 0°.

(4) The chamfering tool according to any one of (1) to (3) above may have a rake angle of -10° or larger and 10° or smaller in an axial direction. This allows the front and rear cutting edges to both have a true rake angle larger than 0°.

(5) The chamfering tool according to any one of (1) to (4) above may have a rake angle of -5° or larger and 5° or smaller in an axial direction. This allows the front and rear cutting edges to both have a true rake angle larger than 0°.

(6) The chamfering tool according to any one of (1) to (5) above may have three to six front cutting edges. This reduces cutting resistance caused when chamfering an upper surface of a workpiece.

(7) The chamfering tool according to any one of (1) to (6) above may have three to six rear cutting edges. This reduces cutting resistance caused when chamfering a lower surface of a workpiece.

### [Description of Embodiments]

Hereinafter, embodiments of the present disclosure (hereinafter also referred to as the present embodiment) will be described more specifically with reference to the drawings. In the figures referred to hereinafter, identical or equivalent components are identically denoted and will not be describe repeatedly.

### (First Embodiment)

Initially, a chamfering tool 100 according to a first embodiment will be described.

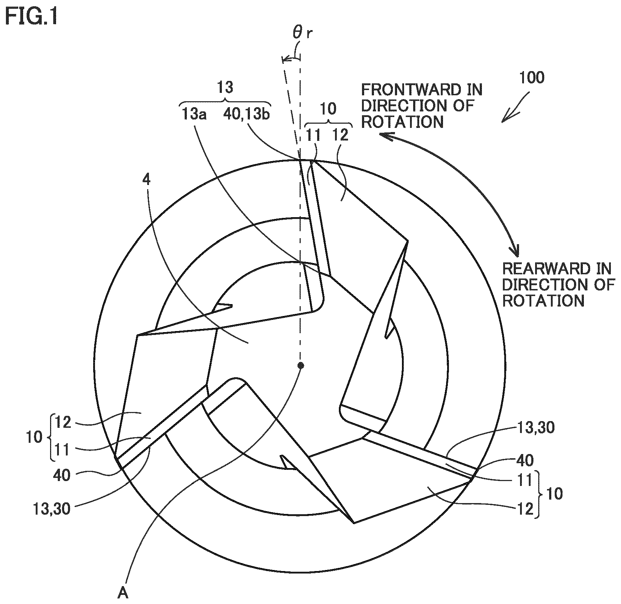

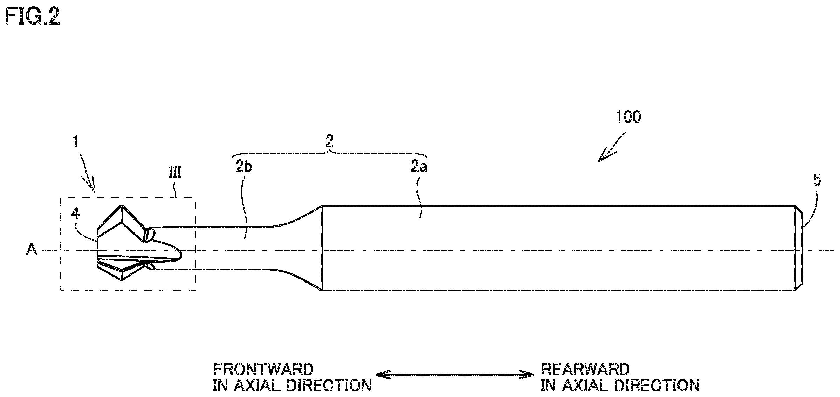

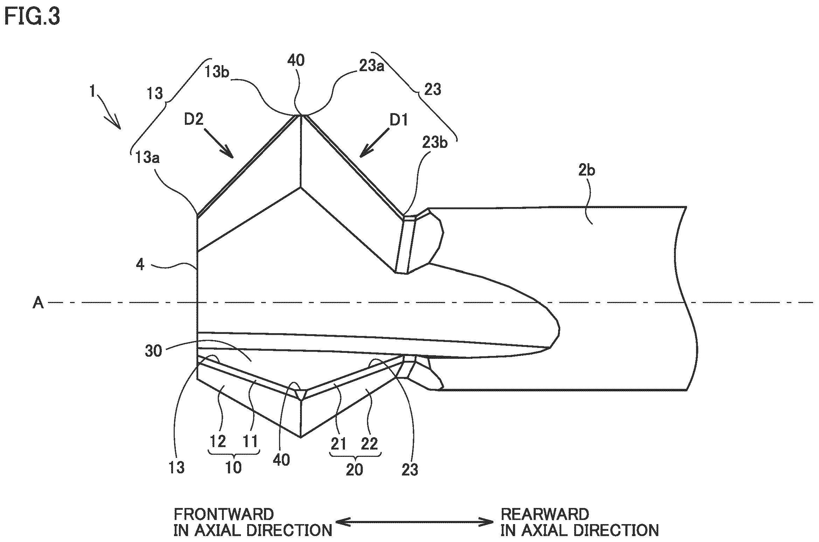

Fig. 1 is a front view of chamfering tool 100 according to the first embodiment. Fig. 2 is a side view of chamfering tool 100 according to the first embodiment. Fig. 3 is a partially enlarged side view of a region III shown in Fig. 2.

Chamfering tool 100 rotates about an axis A. Specifically, as shown in Fig. 1, chamfering tool 100 rotates about axis A so that chamfering tool 100 rotates in a direction counterclockwise. A direction perpendicular to axis A and radially outward from axis A is a radial direction.

As shown in Fig. 2, chamfering tool 100 has a front end portion 4 and a rear end portion 5. Axis A extends between front end portion 4 and rear end portion 5. A direction from front end portion 4 toward rear end portion 5 is an axially rearward direction. A direction from rear end portion 5 toward front end portion 4 is an axially frontward direction. Front end portion 4 and rear end portion 5 are surfaces perpendicular to axis A.

Chamfering tool 100 has a cutting portion 1 and a body 2. Cutting portion 1 is contiguous to body 2. Cutting portion 1 is located axially frontward of body 2. Specifically, body 2 includes a shank region 2a and a neck region 2b. In the radial direction, neck region 2b is smaller in diameter than shank region 2a.

Rear end portion 5 is defined by shank region 2a. Neck region 2b is contiguous to shank region 2a. Neck region 2b is located axially frontward of shank region 2a. Cutting portion 1 is contiguous to neck region 2b. Cutting portion 1 is located axially frontward of neck region 2b. Front end portion 4 is defined by cutting portion 1.

As shown in Fig. 3, chamfering tool 100 has a front flank face 10, a rear flank face 20, a rake face 30, a front cutting edge 13, and a rear cutting edge 23. Front flank face 10, rear flank face 20, rake face 30, front cutting edge 13, and rear cutting edge 23 are formed in cutting portion 1.

Rake face 30 is contiguous to front flank face 10, rear flank face 20, and front end portion 4. Front flank face 10 is contiguous to front end portion 4, rake face 30, and rear flank face 20. Rear flank face 20 is contiguous to rake face 30 and front flank face 10.

As shown in Fig. 3, front flank face 10 is located between front end portion 4 and rear flank face 20 in the axial direction. That is, front flank face 10 is located axially frontward of rear flank face 20. Rear flank face 20 is located axially rearward of front flank face 10.

Front flank face 10 includes a first front flank face 11 and a second front flank face 12. First front flank face 11 is located frontward of second front flank face 12 in the direction of rotation (see Fig. 1). Rear flank face 20 includes a first rear flank face 21 and a second rear flank face 22. First rear flank face 21 is located frontward of second rear flank face 22 in the direction of rotation.

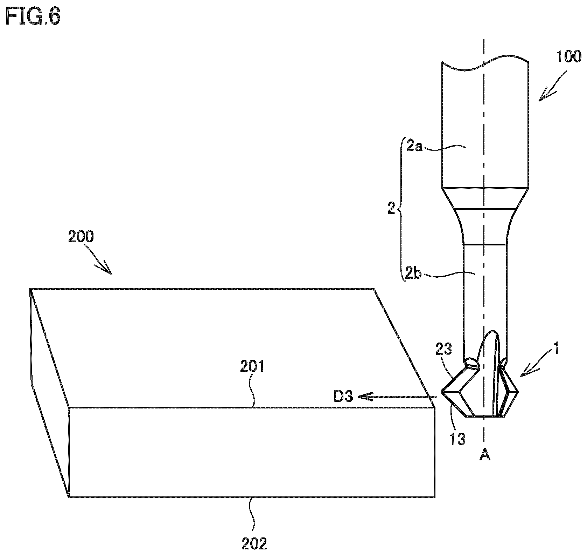

Front cutting edge 13 is defined by a ridgeline formed by rake face 30 and first front flank face 11 of front flank face 10. According to the first embodiment, front cutting edge 13 brought into contact with an end portion 201 of an upper surface of a workpiece 200 while chamfering tool 100 is rotated can chamfer end portion 201 of the upper surface of workpiece 200 (see Fig. 6).

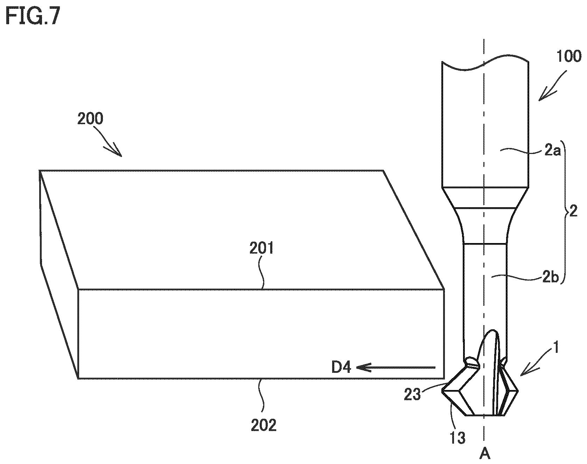

Rear cutting edge 23 is defined by a ridgeline formed by rake face 30 and first rear flank face 21 of rear flank face 20. According to the first embodiment, rear cutting edge 23 brought into contact with an end portion 202 of a lower surface of workpiece 200 while chamfering tool 100 is rotated can chamfer end portion 202 of the lower surface of workpiece 200 (see Fig. 7).

As shown in Fig. 1, chamfering tool 100 has a circumferential end 40. Circumferential end 40 is located in cutting portion 1 at a location farthest from axis A in the radial direction.

As shown in Fig. 3, front cutting edge 13 has a front end 13a contiguous to front end portion 4. Front cutting edge 13 has a rear end 13b contiguous to circumferential end 40. That is, in the radial direction of chamfering tool 100, front end 13a of front cutting edge 13 is located inward of rear end 13b of front cutting edge 13.

Rear cutting edge 23 has a front end 23a contiguous to circumferential end 40. That is, in the radial direction of chamfering tool 100, front end 23a of rear cutting edge 23 is located outward of a rear end 23b of rear cutting edge 23.

In this way, front and rear cutting edges 13 and 23 are connected via circumferential end 40. As a result, front and rear cutting edges 13 and 23 can each be three or larger in number. Further, chamfering tool 100 is enhanced in strength.

Front and rear cutting edges 13 and 23 configured as described above may each be three or more and six or less in number. Chamfering tool 100 according to the first embodiment has three front cutting edges 13 and three rear cutting edges 23. Thus increasing front and rear cutting edges 13 and 23 in number reduces cutting resistance for each cutting edge in chamfering workpiece 200.

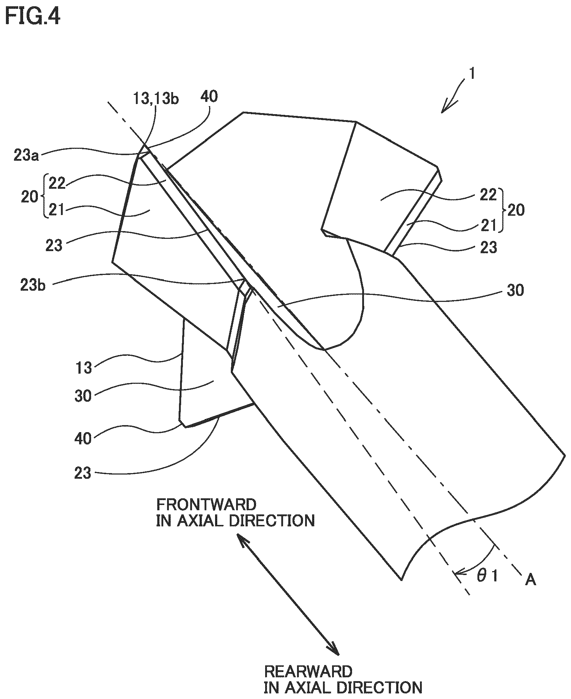

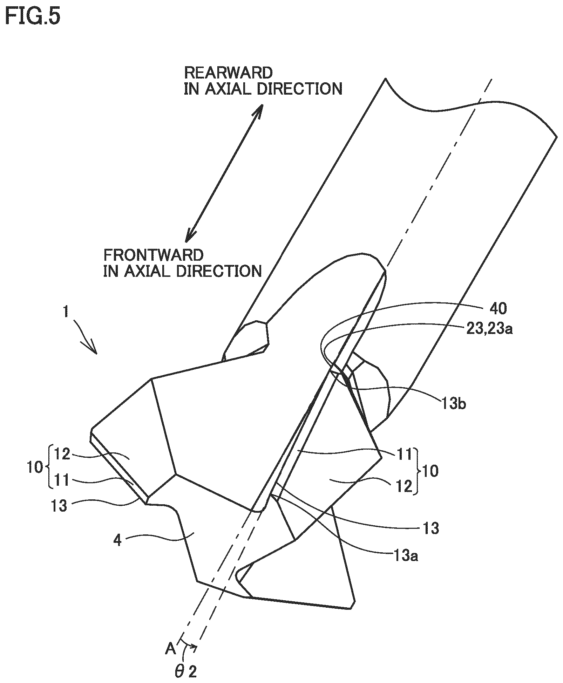

Fig. 4 is a perspective view showing a true rake angle θ1 of front cutting edge 13. Fig. 5 is a perspective view showing a true rake angle θ2 of rear cutting edge 23. As shown in Fig. 4, "true rake angle θ1 of front cutting edge 13" according to the present specification is an angle formed by axis A and rear cutting edge 23 when viewed at a position at which circumferential end 40 (or rear end 13b of front cutting edge 13) overlaps axis A in a direction perpendicular to rear cutting edge 23 (i.e., a direction along an arrow D1 indicated in Fig. 3). As shown in Fig. 5, "true rake angle θ2 of rear cutting edge 23" according to the present specification is an angle formed by axis A and front cutting edge 13 when viewed at a position at which circumferential end 40 (or front end 23a of rear cutting edge 23) overlaps axis A in a direction perpendicular to front cutting edge 13 (i.e., a direction along an arrow D2 indicated in Fig. 3).

As shown in Fig. 4, when rear cutting edge 23 has rear end 23b rearward in the direction of rotation with respect to axis A, true rake angle θ1 is positive. As shown in Fig. 5, when front cutting edge 13 has front end 13a rearward in the direction of rotation with respect to axis A, true rake angle θ2 is positive.

Chamfering tool 100 according to the first embodiment has front cutting edge 13 with true rake angle θ1 larger than 0°, as shown in Fig. 4. True rake angle θ1 may be 3° or larger, and may be 7° or larger. Further, chamfering tool 100 according to the first embodiment has rear cutting edge 23 with true rake angle θ2 larger than 0°, as shown in Fig. 5. True rake angle θ2 may be 3° or larger, and may be 7° or larger. As described above, true rake angles θ1 and θ2 both larger than 0° can reduce cutting resistance caused when chamfering end portion 201 of the upper surface of workpiece 200 and end portion 202 of the lower surface of the workpiece. This can suppress formation of secondary burr and an affected layer during chamfering. Further, the reduced cutting resistance reduces an amount of front and rear cutting edges 13 and 23 worn. As a result, chamfering tool 100 has an increased lifetime.

True rake angle θ1 of front cutting edge 13 and true rake angle θ2 of rear cutting edge 23 are determined by a radial rake angle θr and an axial rake angle θz of chamfering tool 100.

As shown in Fig. 1, "radial rake angle θr" according to the present specification is an angle formed by a line passing through circumferential end 40 from axis A as viewed in a direction along axis A and front cutting edge 13. When, as viewed in the direction along axis A, front cutting edge 13 has front end 13a rearward in the direction of rotation with respect to circumferential end 40 (or rear end 13b of front cutting edge 13), radial rake angle θr is positive. Chamfering tool 100 according to the first embodiment has radial rake angle θr of 10°.

According to the present specification, "axial rake angle θz" is an angle formed by axis A and rake face 30. When, as viewed in the direction along axis A, rear cutting edge 23 is located frontward of front cutting edge 13 in the direction of rotation, axial rake angle θz is positive. Note that chamfering tool 100 according to the first embodiment has axial rake angle θz of 0°, and rake face 30 and axis A parallel to each other.

Radial rake angle θr may be larger than 0° and may be 1° or larger. Axial rake angle θz may be -10° or larger and 10° or smaller, or may be -5° or larger and 5° or smaller. This allows true rake angle θ1 of front cutting edge 13 and true rake angle θ2 of rear cutting edge 23 to both be larger than 0°.

### <Operation>

Fig. 6 schematically shows how front cutting edge 13 is used to chamfer an upper surface of workpiece 200. Fig. 7 schematically shows how rear cutting edge 23 is used to chamfer a lower surface of workpiece 200.

Workpiece 200 has the upper surface chamfered at end portion 201, as follows: initially, while chamfering tool 100 according to the first embodiment is rotated, front cutting edge 13 is brought into contact with end portion 201 of the upper surface of workpiece 200. Subsequently, as shown in Fig. 6, chamfering tool 100 can be moved in a direction indicated by an arrow D3 to chamfer end portion 201.

Workpiece 200 has the lower surface chamfered at end portion 202, as follows: initially, while chamfering tool 100 according to the first embodiment is rotated, rear cutting edge 23 is brought into contact with end portion 202 of the lower surface of workpiece 200. Subsequently, as shown in Fig. 7, chamfering tool 100 can be moved in a direction indicated by an arrow D4 to chamfer end portion 202.

Hereinafter, a function and effect of chamfering tool 100 according to the present disclosure will be described. Conventionally, chamfering workpiece 200 using chamfering tool 100 entails large cutting resistance. In addition, suppression of secondary burr is required in response to a demand for high accuracy of finishing workpiece 200 after it is chamfered.

Chamfering tool 100 according to the present embodiment rotates about axis A. Chamfering tool 100 comprises rake face 30, front flank face 10, rear flank face 20, front cutting edge 13, and rear cutting edge 23. Front flank face 10 is contiguous to rake face 30. Rear flank face 20 is located axially rearward of front flank face 10 and contiguous to rake face 30 and front flank face 10. Front cutting edge 13 is defined by a ridgeline formed by rake face 30 and front flank face 10. Rear cutting edge 23 is defined by a ridgeline formed by rake face 30 and rear flank face 20. In the radial direction of chamfering tool 100, front end 13a of front cutting edge 13 is located inward of rear end 13b of front cutting edge 13. In the radial direction of chamfering tool 100, front end 23a of rear cutting edge 23 is located outward of rear end 23b of rear cutting edge 23. Front cutting edge 13 has true rake angle θ1 larger than 0°. Rear cutting edge 23 has true rake angle θ2 larger than 0°. This reduces cutting resistance in chamfering both end portions 201 and 202 of the upper and lower surfaces of workpiece 200. This can in turn suppress formation of secondary burr and an affected layer during chamfering. Further, the reduced cutting resistance allows chamfering tool 100 to have an increased lifetime.

Chamfering tool 100 of the present embodiment comprises three or more and six or less front cutting edges 13. This reduces cutting resistance caused when chamfering the upper surface of workpiece 200.

Chamfering tool 100 of the present embodiment comprises three or more and six or less rear cutting edges 23. This reduces cutting resistance caused when chamfering the lower surface of workpiece 200.

### <Examples>

### (Preparing Samples)

Initially, chamfering tools 100 of Samples 1 to 4 were prepared. Chamfering tools 100 of Samples 1 to 4 all have three front cutting edges 13 and three rear cutting edges 23. Chamfering tools 100 of Samples 1 to 4 have a cutting diameter of 6 mm.

Chamfering tools 100 of Samples 1 to 4 are formed of cemented carbide. Chamfering tools 100 of Samples 1 to 4 each have a surface with a coating film formed thereon. The coating film on chamfering tool 100 of Sample 1 is a TiAlCrN coating containing titanium (Ti), aluminum (Al), chromium (Cr), and nitrogen (N). The coating film on chamfering tool 100 of Sample 2 is a TiAlN coating containing Ti, Al, and N. The coating film on chamfering tool 100 of Sample 3 is a CrN coating containing Cr and N.

Samples 1 to 3 are comparative examples. The comparative examples have true rake angle θ1 and/or true rake angle θ2 smaller than 0°. Sample 4 is an example. The example has true rake angles θ1 and θ2 both larger than 0°. Each sample has radial rake angle θr, axial rake angle θz, true rake angle θ1, and true rake angle θ2 as shown in Table 1.

**[Table 1]**

| samples | 1 | 2 | 3 | 4 |
|---|---|---|---|---|
| radial rake angle θr | -23° | -17° | -2° | 10° |
| axial rake angle θz | 13° | 13° | 15° | 0° |
| true rake angle θ1 | -8° | -3° | 9° | 7° |
| true rake angle θ2 | -25° | -21° | -12° | 7° |

### (Processing Condition 1)

Subsequently, workpiece 200 that was a titanium alloy sheet had upper and lower surfaces chamfered at end portions 201 and 202, respectively, with chamfering tools 100 of Samples 1 to 4. The upper surface had end portion 201 chamfered with front cutting edge 13. The lower surface had end portion 202 chamfered with rear cutting edge 23. Workpiece 200 chamfered had a width of 220 mm.

Mechanical equipment of BT30 was used as a vertical machining center. A cutting speed Vc was set to 100 m/minute. A feed rate f was set to 0.033 mm/rev. An amount to be chamfered was set to 0.5 mm so that end portions 201 and 202 were C-chamfered.

Workpiece 200 is a titanium (Ti) alloy sheet mainly used in the aviation industry. The titanium alloy sheet contains 6% by mass of aluminum and 4% by mass of vanadium (V). Note that for processing condition 1, as the cemented carbide forming chamfering tool 100 of Sample 4 was used a cemented carbide that was KH26 in material type (produced by Sumitomo Electric Industries, Ltd.).

### (Test Result 1)

Burr height that the upper and lower surfaces had at end portions 201 and 202, respectively, an amount of each of front and rear cutting edges 13 and 23 worn, and cutting resistance experienced by chamfering tool 100, were evaluated. Note that cutting resistance is a resultant force of cutting resistances in directions x and y, and cutting resistance in the axial direction (or a direction z) is not considered. Table 2 shows a test result under processing condition 1 for workpiece 200 that was a titanium alloy sheet.

**[Table 2]**

| samples | | | 1 | 2 | 3 | 4 |
|---|---|---|---|---|---|---|
| burr height | upper surface | µm | 5 | 11 | 10 | 0 |
| | lower surface | | 10 | 12 | 12 | 0 |
| worn amount | front cutting edge | µm | 27 | 26 | 25 | 5 |
| | rear cutting edge | | 21 | 21 | 21 | 5 |
| cutting resistance | front cutting edge | N | 35 | 33 | 28 | 18 |
| | rear cutting edge | | 31 | 32 | 21 | 21 |

As shown in Table 2, when chamfering tools 100 of Samples 1 to 3 were used, the upper and lower surfaces had end portions 201 and 202, respectively, with burrs of 5 µm or larger in height. In contrast, when chamfering tool 100 of Sample 4 was used, the upper and lower surfaces had end portions 201 and 202, respectively, with burr of 0 µm in height. Using chamfering tool 100 with true rake angles θ1 and θ2 both larger than 0° better finishes workpiece 200 after it is chamfered.

As shown in Table 2, when chamfering tools 100 of Samples 1 to 3 were used, front and rear cutting edges 13 and 23 were worn in an amount of 10 µm or larger. In contrast, when chamfering tool 100 of Sample 4 was used, front and rear cutting edges 13 and 23 were worn in an amount of 5 µm. Using chamfering tool 100 with true rake angles θ1 and θ2 both larger than 0° reduces an amount of front and rear cutting edges 13 and 23 worn.

As shown in Table 2, when chamfering tools 100 of Samples 1 to 3 were used to chamfer the upper surface's end portion 201 and the lower surface's end portion 202 by front and rear cutting edges 13 and 23, respectively, at least one of front and rear cutting edges 13 and 23 experiences cutting resistance of 25 N or larger. In contrast, when chamfering the upper surface's end portion 201 and the lower surface's end portion 202 by front and rear cutting edges 13 and 23, respectively, front and rear cutting edges 13 and 23 both experience cutting resistance smaller than 25 N. Using chamfering tool 100 with true rake angles θ1 and θ2 both larger than 0° reduces cutting resistance experienced by front and rear cutting edges 13 and 23.

### (Processing Condition 2)

Subsequently, workpiece 200 that was Inconel^{®} 718 had upper and lower surfaces chamfered at end portions 201 and 202, respectively, with chamfering tools 100 of Samples 1 to 4. The upper surface had end portion 201 chamfered with front cutting edge 13. The lower surface had end portion 202 chamfered with rear cutting edge 23. Workpiece 200 chamfered had a width of 220 mm.

NVX5100 produced by DGM MORI Co., Ltd. was used as a vertical machining center. Cutting speed Vc was set to 30 m/minute. Feed rate f was set to 0.033 mm/rev. An amount to be chamfered was set to 0.5 mm so that end portions 201 and 202 were C-chamfered.

Workpiece 200 is Inconel^{®} 718. Note that for processing condition 2, as the cemented carbide forming chamfering tool 100 of sample 4 was used a cemented carbide that was AFU in material type (produced by Sumitomo Electric Industries, Ltd.).

### (Test Result 2)

Burr height that the upper and lower surfaces had at end portions 201 and 202, respectively, an amount of each of front and rear cutting edges 13 and 23 worn, and cutting resistance experienced by chamfering tool 100, were evaluated. Note that cutting resistance is a resultant force of cutting resistances in the directions x and y, and cutting resistance in the axial direction (or the direction z) is not considered. Table 3 shows a test result under processing condition 2 for workpiece 200 that was a titanium alloy sheet.

**[Table 3]**

| samples | | | 1 | 2 | 3 | 4 |
|---|---|---|---|---|---|---|
| burr height | upper surface | µm | 9 | 14 | 12 | 5 |
| | lower surface | | 36 | 43 | 31 | 11 |
| worn amount | front cutting edge | µm | 48 | 48 | 88 | 34 |
| | rear cutting edge | | 43 | 56 | 66 | 33 |
| cutting resistance | front cutting edge | N | 103 | 80 | 72 | 76 |
| | rear cutting edge | | 78 | 96 | 102 | 64 |

As shown in Table 3, when chamfering tools 100 of Samples 1 to 3 were used, the upper surface had end portion 201 with a burr of 8 µm or larger in height. In contrast, when chamfering tool 100 of Sample 4 was used, the upper surface had end portion 201 with a burr of 5 µm in height. The lower surface had end portion 202 with a burr of 30 µm or larger in height. In contrast, when chamfering tool 100 of Sample 4 was used, the lower surface had end portion 202 with a burr of 11 µm in height. Using chamfering tool 100 with true rake angles θ1 and θ2 both larger than 0° better finishes workpiece 200 after it is chamfered.

As shown in Table 3, when chamfering tools 100 of Samples 1 to 3 were used, front and rear cutting edges 13 and 23 were worn in an amount of 40 µm or larger. In contrast, when chamfering tool 100 of Sample 4 was used, front and rear cutting edges 13 and 23 were worn in an amount of 35 µm or smaller. Using chamfering tool 100 with true rake angles θ1 and θ2 both larger than 0° reduces an amount of front and rear cutting edges 13 and 23 worn.

As shown in Table 3, when chamfering tools 100 of Samples 1 to 3 were used to chamfer the upper surface's end portion 201 and the lower surface's end portion 202 by front and rear cutting edges 13 and 23, respectively, either front or rear cutting edge 13 and 23 experiences cutting resistance of 90 N or larger. In contrast, when chamfering the upper surface's end portion 201 and the lower surface's end portion 202 by front and rear cutting edges 13 and 23, respectively, front and rear cutting edges 13 and 23 both experience cutting resistance smaller than 80 N. Using chamfering tool 100 with true rake angles θ1 and θ2 both larger than 0° reduces cutting resistance experienced by front and rear cutting edges 13 and 23.

It should be understood that the embodiments disclosed herein are illustrative and non-restrictive in any respect. The scope of the present disclosure is basically defined by the terms of the claims, rather than by the above-described embodiments, and is intended to encompass any modification falling within the meaning and scope equivalent to the terms of the claims.

### REFERENCE SIGNS LIST

1 cutting portion, 2 body, 2a shank region, 2b neck region, 4 front end portion, 5 rear end portion, 10 front flank face, 11 first front flank face, 12 second front flank face, 13 front cutting edge, 13a, 23a front end, 13b, 23b rear end, 20 rear flank face, 21 first rear flank face, 22 second rear flank face, 23 rear cutting edge, 30 rake face, 40 circumferential end, 100 chamfering tool, 200 workpiece, 201, 202 end portion, A axis, D1, D2, D3, D4 arrow, θ1, θ2 true rake angle, θr radial rake angle, θz axial rake angle.

## Claims

1. A chamfering tool that rotates about an axis, comprising:
a rake face;
a front flank face contiguous to the rake face;
a rear flank face located rearward of the front flank face in an axial direction and contiguous to the rake face and the front flank face;
a front cutting edge defined by a ridgeline formed by the rake face and the front flank face; and
a rear cutting edge defined by a ridgeline formed by the rake face and the rear flank face, wherein
in a radial direction of the chamfering tool, a front end of the front cutting edge is located inward of a rear end of the front cutting edge,
in the radial direction of the chamfering tool, a front end of the rear cutting edge is located outward of a rear end of the rear cutting edge,
the front cutting edge has a true rake angle larger than 0°, and
the rear cutting edge has a true rake angle larger than 0°.

2. The chamfering tool according to claim 1, having a rake angle larger than 0° in the radial direction.

3. The chamfering tool according to claim 1 or 2, having a rake angle of 1° or larger in the radial direction.

4. The chamfering tool according to any one of claims 1 to 3, having a rake angle of -10° or larger and 10° or smaller in an axial direction.

5. The chamfering tool according to any one of claims 1 to 4, having a rake angle of -5° or larger and 5° or smaller in an axial direction.

6. The chamfering tool according to any one of claims 1 to 5, wherein the front cutting edge is three or more and six or less in number.

7. The chamfering tool according to any one of claims 1 to 6, wherein the rear cutting edge is three or more and six or less in number.
